# EUROPÄISCHE PATENTSCHRIFT

(11) **EP 1 495 948 B1**
(45) Veröffentlichungstag und Bekanntmachung des Hinweises auf die Patenterteilung: **12.12.2007**
(21) Anmeldenummer: 03405525.1
(22) Anmeldetag: 11.07.2003
(51) Int. Cl.: B62D 31/02, B62D 65/02

(54) **Autobus mit einem Wagenkasten aus einem Grundgerippe und einem Dachteil**
Bus with a body made from a skeleton frame and a roof module
Autobus avec une carrosserie faite à partir d'une ossature autoportante et d'un module de toit

(43) Veröffentlichungstag der Anmeldung: 12.01.2005
(73) Patentinhaber: Alcan Technology & Management Ltd., 8212 Neuhausen am Rheinfall (CH); DaimlerChrysler AG, 70327 Stuttgart (DE)
(72) Erfinder: Wieschermann, Jochen, 88682 Salem (DE); Waldeck, Klaus-Dieter, 8954 Geroldswil (CH); Averbeck, Richard, 73240 Wendlingen (DE)
(74) Vertreter: Burkhart, Hans

(56) Entgegenhaltungen:
- EP-A- 0 254 689
- EP-A- 1 000 841
- US-A- 3 792 934

## Beschreibung

Die Erfindung betrifft ein Verfahren zur Herstellung einer Autobus mit einem Wagenkasten aus einem selbsttragenden Grundgerippe, einem am Grundgerippe festgelegtem Innenausbau und einem mit dem Grundgerippe verbundenen Dachteil.

Bekannte selbsttragende Gerippestrukturen von Autobussen bestehen beispielsweise aus miteinander verschweissten oder verschraubten Profilen aus Stahl oder Aluminium. Das Dachgerippe ist Bestandteil einer Integral-Rohbaustruktur und wird nach der Lackierung verblecht, isoliert und zusammen mit dem Innenausbau vervollständigt.

Bekannt ist auch ein Dachgerippemodul, welches teilweise vorkomplettiert und mit dem Restgerippe verschraubt oder verschweisst ist. Front- und Heckdachkappen sind nicht Bestandteil des Dachmoduls, und die Ausführung ist bisher nur für gleichartige Strukturwerkstoffe (Stahl/Stahl oder Aluminium/Aluminium) realisiert worden.

Bei der erstgenannten Standardausführung, welche heute überwiegend verwendet wird, ist ein Grossteil der Arbeiten zeitaufwendig über dem Kopf durchzuführen. Es ergeben sich dadurch hohe Produktionskosten. Ebenso sind die Fehlersuche und die Behebung von Fehlern an den immer komplexer werdenden Installationen sehr aufwendig und damit teuer. Durch die begrenzte Zugänglichkeit des Fahrzeuginnenraumes über die verhältnismässig kleinen Türöffnungen wird der Einbau von Bestuhlungen, Trennwänden und Fahrerplätzen in die Fahrzeuge erheblich erschwert und ebenfalls verteuert. Bei den Stahlkonstruktionen ergeben sich zudem hohe Dachgewichte und somit Fahrzeugschwerpunkte, die für die Überrollanforderungen nach ECE R66 komplexere Überrollstrukturen erforderlich machen. Ebenfalls verunmöglicht die fehlende Integrationsmöglichkeit von Front- und Heckteilen die vollständige Komplettierung und Funktionsfähigkeit der heutigen Dachmodule.

Ein Verfahren der eingangs gennanten Art ist aus US 3 792 934 A bekannt.

Der Erfindung liegt die Aufgabe zugrunde, bei einem Autobus der eingangs genannten Art den Zusammenbau des Wagenkastens zu vereinfachen und dadurch die Produktionskosten zu senken.

Zur erfindungsgemässen Lösung der Aufgabe führt ein Verfahren mit den Merkmalen des Anspruchs 1.

Vorteilhafte Weiterbildungen des Erfindungsgemässen Verfahrens sind gegenstand abhängiger Ansprüche.

Die wesentlichen Vorteile der Erfindung sind das weitgehende Entfallen von Montagen über Kopf, eine erhebliche Reduktion der Produktionskosten, verbesserte Qualität des Produktes durch geringere Fehleranfälligkeit sowie ein geringeres Fahrzeuggewicht mit niedrigerem Schwerpunkt.

Ein weiterer wesentlicher Vorteil der erfindungsgemässen Konstruktion ist die Tatsache, dass es damit möglich wird, eine Aluminium-Hybridausführung eines Dachmoduls auf ein Grundgerippe aus Stahl aufzusetzen, ohne dass mit Problemen wegen der unterschiedlichen Wärmeausdehnung von Aluminium und Stahl zu rechnen ist.

Bevorzugt ist das Dachmodul mit integrierten Front und/oder Heckdachkappen einschliesslich den Linienwählern ausgestattet.

Das Dachmodul weist zweckmässigerweise eine Basisstruktur mit Aluminiumprofilen und Flächenelementen aus einem gegebenenfalls glasfaserverstärktem Kunststoff oder aus einem ein- oder beidseitig mit Kunststoff- oder Metalldeckschichten beplankten Hartstoffschaumkern auf.

Bei einer bevorzugten Ausführungsform ist vorgesehen, dass das Dachmodul in Hybrid-Leichtbauweise gefertigt ist.

Durch eine sinnvolle Kombination von speziell gestalteten Klebe- und Schrauboder Schnappverbindungen wird die Steifigkeit und die Überrollfestigkeit der Gesamtstruktur gewährleistet. Die Kombination der Verbindungssysteme ermöglicht ausserdem, die kurzen Taktzeiten einer Grossserienproduktion ohne zusätzliche Aushärteplätze oder dgl. zu garantieren.

Das funktionsfähige fertige Dachmodul wird erst nach Fertigstellung des gesamten Innenausbaus der Reststruktur auf das Fahrzeug aufgesetzt. Je nach Situation des Innenausbaus kann das Dachmodul horizontal oder vertikal auf das Grundgerippe aufgesetzt werden.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- - Fig. 1: eine Schrägsicht auf ein Grundgerippe eines Wagenkastens;
- - Fig. 2: eine Schrägsicht auf ein Dachmodul;
- - Fig. 3: eine Schrägsicht auf einen Teil eines teilweise fertig gestellten Dachmoduls in vergrösserter Darstellung;
- - Fig.4: eine Schrägsicht auf einen Teil einer Seitenwand eines Grundgerippes;
- - Fig. 5: eine Schrägsicht auf das auf dem Grundgerippe von Fig. 4 aufgesetzten Dachmodul von Fig. 3;
- - Fig. 6: eine Schrägsicht auf ein Detail A von Fig. 5.

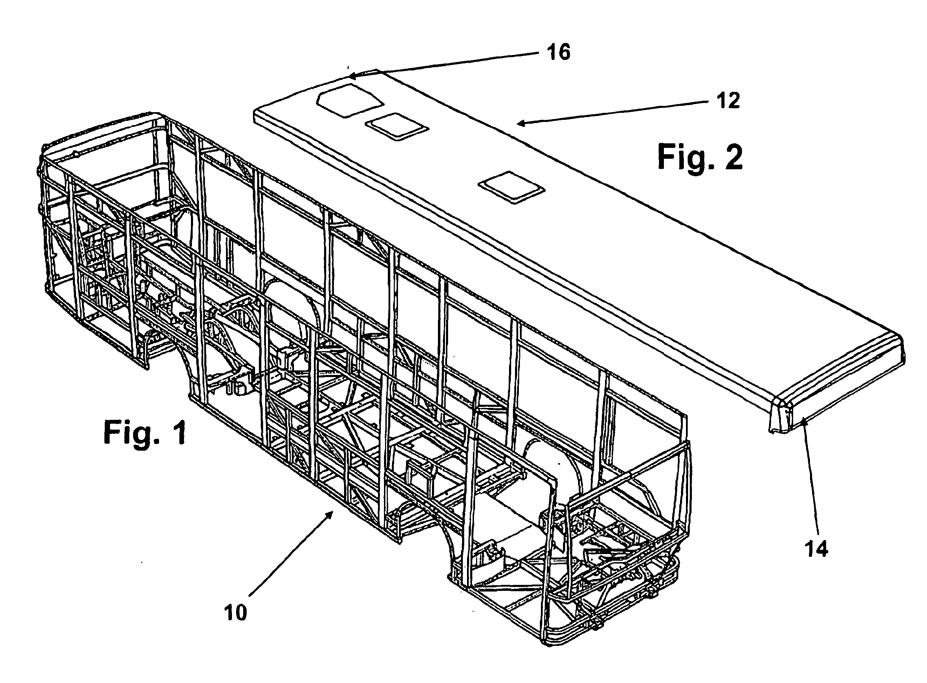

Ein in Fig. 1 dargestelltes Grundgerippe 10 eines Autobus ist beispielsweise aus miteinander verschweissten oder verschraubten Stahl- oder Aluminiumprofilen aufgebaut. Nachdem das Gittergerüst fertiggestellt ist, erfolgt der Einbau von Bestuhlungen, Trennwänden und Fahrerplätzen. Anschliessend werden die Seitenwandbleche, Kofferraumklappen und das Heck montiert.

Ein in Fig. 2 dargestelltes Dachmodul 12 weist beispielsweise eine Basisstruktur mit Aluminiumprofilen und Flächenelementen aus einem gegebenenfalls glasfaserverstärkten Kunststoff oder aus einem ein- oder beidseitig mit Kunststoff- oder Metalldeckschichten beplankten Hartschaumstoffkern auf. Die Basisstruktur wird vor der definitiven Montage auf dem Grundgerippe 10 vollständig mit allen Installationen, Ein- und Aufbauten wie Klimaanlagen, Dachlüftern, Linienwählern, Türantrieben, usw. ausgerüstet und auf Funktion geprüft.

Der Einbau sämtlicher Installationen und Verkleidungen erfolgt in idealer Arbeitsposition in schwenkbaren Vorrichtungen. Das funktionsfähige fertige Dachmodul 12, gegebenenfalls mit integrierten Front- und Heckdachkappen 14, 16, wird nach Fertigstellung des Innenausbaus der Reststruktur auf das Fahrzeug aufgesetzt. Die Verbindung zwischen Dachmodul 12 und Grundgerippe 10 erfolgt beispielsweise über Klebe- und Schraub- oder über Klebe- und Schnappverbindungen.

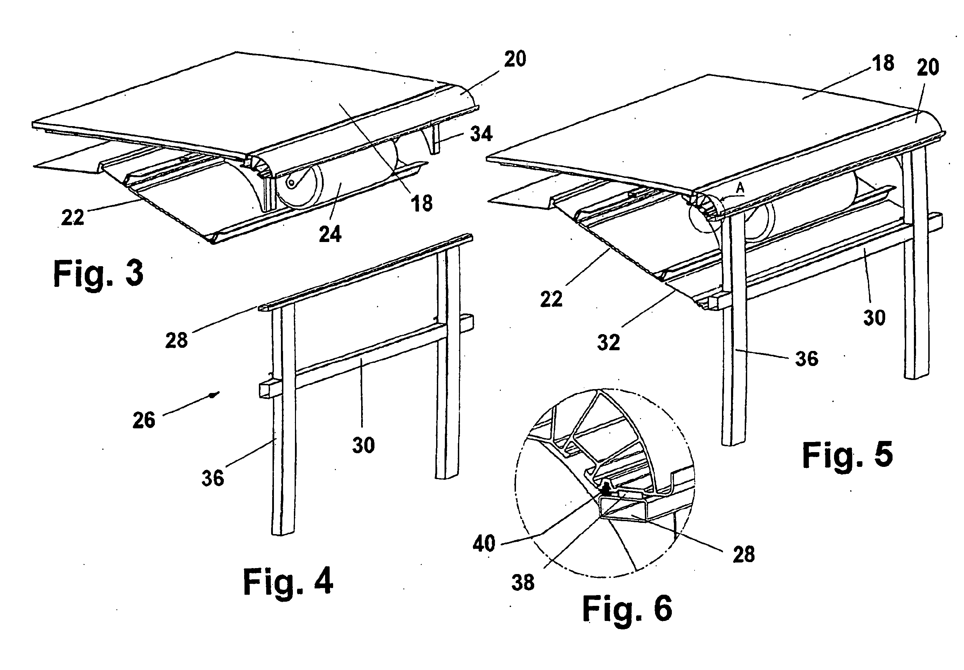

Bei dem in Fig. 3 gezeigten, vormontierten Dachmodul 12 ist eine beispielsweise aus einem Sandwichwerkstoff wie z.B. einer Verbundplatte aus einem Kunststoffkern mit beidseitigen Deckblechen aus Aluminium als Aussenverkleidung 18 mit einem Randprofil 20 in der Form eines stranggepressten Hohlprofils aus Aluminium verbunden. Den innenseitigen Abschluss des Dachmoduls 12 bildet eine beispielsweise aus Kunststoff, Metallblechen oder Kunststoff/Metall-Verbundplatten bestehende Innenverkleidung 22, die Bestandteil des vormontierten Dachmoduls 12 ist.

Der Raum zwischen der Aussenverkleidung 18 und der Innenverkleidung 22 wird für diverse Einbauten wie z.B. die Verkabelung, Klimageräte und dgl. genutzt. Im gezeigten Ausführungsbeispiel ist beispielhaft ein Behälter 24 im genannten Zwischenraum angeordnet.

Eine in Fig. 4 dargestellte Seitenwand 26 des Grundgerippes 10 weist als oberen Abschluss ein Dachkantenprofil 28 als Auflage für das Randprofil 20 auf. Ein zum Dachkantenprofil 28 parallel verlaufendes und von diesem in vertikalem Abstand angeordnetes Seitenwandprofil 30 dient der Halterung eines Abdeckstreifens 32, der nach der Festlegung des Dachmoduls 12 am Grundgerippe 10 als Abschluss der Innenverkleidung 22 zur Seitenwand 26 eingesetzt wird (Fig. 5).

Zur Befestigung des Dachmoduls 12 am Grundgerippe 10 dienen speziell gestaltete Klebe- und Schnapp- oder Klebe- und Schraubverbindungen. Die Kombination dieser Verbindungssysteme führt einerseits zu einer Erhöhung der Steifigkeit und Überrollfestigkeit der Gesamtstruktur. Andererseits wird es auf diese Weise möglich, ein Dachmodul 12 über ein integriertes Randprofil 20 aus Aluminium mit den Dachkantenprofilen 28 eines aus Stahlprofilen bestehenden Grundgerippes 10 zu verbinden, ohne dass Probleme aufgrund der unterschiedlichen Wärmeausdehnung von Aluminium und Stahl auftreten.

Ein in den Fig. 3 und 5 gezeigtes Verbindungssystem umfasst Knoten 34, die im Dachmodul 12 lose vormontiert sind. Die Knoten 34 können beispielsweise mit Vertikalprofilen 36 des Grundgerippes 10 verschraubt, verklebt oder über eine Schnappverbindung verbunden sein.

Eine Klebverbindung ist beispielhaft in Fig. 6 gezeigt. Eine Klebstoffraupe 38 ist im Verbindungsbereich zwischen dem Randprofil 20 und dem Dachkantenprofil 28 angeordnet. Ein längs laufendes Gummiprofil 40 stellt einen ausreichend grossen Zwischenraum für den auch nachträglich einbringbaren Kleber zur Verfügung.

## Patentansprüche

1. Verfahren zur Herstellung eines Autobus mit einem Wagenkasten aus einem selbsttragenden Grundgerippe (10), einem am Grundgerippe festgelegtem Innenausbau und einem mit dem Grundgerippe verbundenen Dachteil,
**dadurch gekennzeichnet, dass**
ein separates, strukturell tragendes und vollständig ausgerüstetes Dachmodul (12) auf das mit dem Innenausbau versehene Grundgerippe (10) aufgesetzt und am Grundgerippe (10) über kombinierte Klebe- und Schraubverbindungen oder Klebe- und Schnappverbindungen befestigt wird.

2. Verfahren nach Anspruch 1, **dadurch gekennzeichnet, dass** das Dachmodul (12) mit integrierten Front- und/oder Heckdachkappen (14,16) ausgestattet ist.

3. Verfahren nach Anspruch 1 oder 2, **dadurch gekennzeichnet, dass** das Dachmodul (12) eine Basisstruktur mit Aluminiumprofilen und Flächenelementen aus einem gegebenenfalls glasfaserverstärktem Kunststoff oder aus einem ein- oder beidseitig mit Kunststoff- oder Metalldeckschichten beplankten Hartstoffschaumkern aufweist.

4. Verfahren nach einem der Ansprüche 1 bis 3, **dadurch gekennzeichnet, dass** das Dachmodul (12) in Hybrid-Leichtbauweise gefertigt ist.

5. Verfahren nach einem der Ansprüche 1 bis 4, **dadurch gekennzeichnet, dass** das Dachmodul (12) über ein integriertes. Randprofil (20) aus Aluminium mit einem Dachkantenprofil (28) eines aus Stahlprofilen bestehenden Grundgerippes (10) verbunden wird.

## Claims

1. Method for producing a motor bus using a car body composed of a self-supporting base frame (10), an interior structure fixed on the base frame and a roof section joined to the base frame, **characterised in that** a separate, structurally bearing and completely fitted out roof module (12) is set up on top of the base frame (10) provided with the interior fittings and fastened to the base frame (10) through combined glued and screw joints or glued and snap-on joints.

2. Method according to claim 1, **characterised in that** the roof module (12) is equipped with integrated front and/or rear roof caps (14, 16).

3. Method according to claim 1 or 2, **characterised in that** the roof module (12) comprises a base structure with aluminium profiles and surface elements composed of a plastic possibly reinforced with glass fibres or composed of a hard foam material clad on one or both sides with plastic or metal covering layers.

4. Method according to any of claims 1 to 3, **characterised in that** the roof module (12) is manufactured in hybrid lightweight construction mode.

5. Method according to any of claims 1 to 4, **characterised in that** the roof module (12) is joined via an integrated edge profile (20) composed of aluminium to a roof edge profile (28) of a base frame (10) consisting of steel profiles.

## Revendications

1. Procédé de fabrication d'un autobus comprenant une caisse de véhicule en une ossature de base (10) autoportante, un équipement intérieur fixé à l'ossature de base, et une partie de toit reliée à l'ossature de base,
**caractérisé en ce qu'**un module de toit (12) séparé, structurellement porteur et complètement équipé, est rapporté sur l'ossature de base (10) muni de l'équipement intérieur, et est fixé à l'ossature de base (10) par l'intermédiaire de liaisons combinées de collage et de vissage ou de collage et à encliquetage.

2. Procédé selon la revendication 1, **caractérisé en ce que** le module de toit (12) est équipé de trappons de toit avant et/ou arrière (14, 16) intégrés.

3. Procédé selon la revendication 1 ou 2, **caractérisé en ce que** le module de toit (12) présente une structure de base à profilés en aluminium et des éléments de surface en une matière plastique éventuellement renforcée de fibres de verre, ou en un noyau en mousse dure revêtu, sur une ou les deux faces, de couches de recouvrement en métal ou en matière plastique.

4. Procédé selon l'une des revendications 1 à 3, **caractérisé en ce que** le module de toit (12) est fabriqué selon un mode de construction allégée hybride.

5. Procédé selon l'une des revendications 1 à 4, **caractérisé en ce que** le module de toit (12) est assemblé, par l'intermédiaire d'un profilé de bordure (20) intégré en aluminium, à un profilé de rive de toit (28) d'une ossature de base (10) constituée de profilés en acier.
